# DEMANDE DE BREVET EUROPEEN

(11) **EP 2 053 532 A1**
(43) Date de publication de la demande: **29.04.2009**
(21) Numéro de dépôt: 08166171.2
(22) Date de dépôt: 09.10.2008
(51) Int. Cl.: G06F 21/00

(54) **Procédé d'ouverture sécurisée à des tiers d'une carte à microcircuit**

(30) Priorité: 25.10.2007 FR 0758585
(71) Demandeur: Societé Française du Radiotéléphone, 92915 Paris la Défense Cedex (FR)
(72) Inventeur: Eznack, Maryline, 78260 ACHERES (FR); Wary, Jean-Philippe, 92340 BOURG LA REINE (FR)
(74) Mandataire: Schmit, Christian Norbert Marie

(57) **Abrégé**

Pour permettre à des tiers d'installer des applications de manière sécurisée on cloisonne de manière hermétique les différentes applications. Ce cloisonnement est soit logiciel, soit physique, soit les deux. Dans l'invention on met en oeuvre deux zones mémoire l'une, la première, étant normale, c'est-à-dire telle que celles qui existent actuellement dans les dispositifs mobiles et qui comportent les codes instructions applicatifs mis en oeuvre par les dispositifs mobiles. L'invention met également en oeuvre une deuxième zone mémoire comportant elle les codes instructions des applications sensibles. Dans l'invention cette deuxième zone mémoire n'est accessible que via une application de la première zone mémoire. Cette application a en charge de valider des critères d'accès à la deuxième zone mémoire. Ces critères sont tels qu'ils permettent à l'architecture ainsi constituée d'être certifiée au moins EAL4+.

## Description

La présente invention a pour objet un procédé d'ouverture sécurisée à des tiers d'une carte à microcircuit.

Le domaine de l'invention est celui des cartes à microcircuit, et plus particulièrement celui des cartes à microcircuit des opérateurs de télécommunications dites cartes (U)SIM ((Universal) Subscriber Identity Module, pour module d'identification de l'abonné). Il faut ici comprendre carte SIM au sens large incluant les cartes "SIM toolkit" et les cartes à microcircuit de dernières générations telles que celles distribuées par les opérateurs de téléphonie mobile. Il s'agit donc de cartes à microcircuit intelligentes au sens où elles sont capables de traitements complexes (gestion de protocoles, chiffrement, application ludique, application métier, application bancaire). Ces cartes microcircuits sont aussi dotées de capacités de stockages importantes, c'est-à-dire plusieurs Mo (Méga Octets), voir Go (Giga Octets) ou plus.

Dans l'état de la technique on connaît des cartes à microcircuit dans plusieurs domaines. Ces domaines sont au moins celui des télécommunications et celui des banques. Dans le domaine des banques les carte à microcircuit permettent à un porteur légitime de ladite carte d'accéder à son ou ses comptes bancaires mis à sa disposition par l'établissement bancaire ayant émis la carte à microcircuit. Une telle carte à microcircuit permet donc de s'introduire, de manière contrôlée et légale, dans le système d'information d'un établissement bancaire.

Les acteurs du domaine bancaire sont donc très attentifs à l'intégration des cartes à microcircuit qu'ils distribuent ou laissent distribuer par des tiers sous leur strict contrôle. La fourniture par des tiers de services autres que bancaires n'est pas autorisée aujourd'hui par les établissements bancaires dans leurs cartes bancaires à microcircuit. En effet, cela reviendrait à permettre à des tiers d'accéder aux applications et protocoles (de communication et de sécurité) mis en oeuvre par les établissements bancaires dans leurs cartes à microcircuit.

Du point de vue de l'utilisateur il y a cependant un intérêt certain à intégrer plusieurs services dans une même carte à microcircuit qui lui permettrait à la fois de se connecter à un réseau de télécommunication et de plus d'effectuer des opérations bancaires, c'est-à-dire d'avoir plusieurs types d'applications sur une seule et même carte à microcircuit connectée dans un connecteur interne d'un dispositif de type téléphone mobile ou assistant personnel. Les établissements bancaires y sont opposés car ils considèrent que la sécurité d'un dispositif exécutant deux applications n'est pas garantie.

Cette opposition est renforcée par la nécessité du monde des télécommunications de s'adapter aux évolutions technologiques notamment dans le domaine des contenus dits actifs. Cela revient à faire évoluer dans le temps l'environnement d'exécution d'une application par l'ajout de codes instructions correspondant à de nouveaux services.

On constate actuellement des divergences techniques et économiques entre les obligations économiques des opérateurs de téléphonie mobile qui doivent s'adapter au marché et permettre l'hébergement de nouveaux services sur leurs cartes USIM, la volonté des établissements bancaires qui souhaitent une sécurité maximale et les désirs des consommateurs qui ne veulent pas être captifs d'une solution technique les limitant dans leur adaptation aux nouvelles technologies.

Dans l'invention, on résout ces problèmes en cloisonnant de manière hermétique les différentes applications. Ce cloisonnement est soit logiciel, soit physique, soit les deux. Dans l'invention on met en oeuvre au moins deux zones mémoires l'une, la première, étant normale, comme actuellement définie dans les dispositifs mobiles qui comportent les codes instructions applicatifs mis en oeuvre par lesdits dispositifs mobiles. L'invention met également en oeuvre au moins une deuxième zone mémoire comportant les codes instructions des applications sensibles. Dans l'invention cette deuxième zone mémoire n'est accessible que via une application de la première zone mémoire. Cette application a en charge de valider des critères d'accès à la deuxième zone mémoire. Ces critères sont tels qu'ils permettent à l'architecture ainsi constituée d'être certifiée au moins EAL4+ suivant les profils de protection relatifs aux niveaux de sensibilités des applications embarquées (par exemple de type bancaire) au sens des critères communs.

L'invention a donc pour objet un procédé d'ouverture sécurisée à des tiers d'une carte à microcircuit distribuée par un fournisseur de services, ladite carte à microcircuit comporte un premier ensemble d'applications comportant au moins une application, ledit procédé comportant au moins les étapes suivantes:
- à la réception d'un message de requête la carte à microcircuit valide selon des premiers critères le contenu du message de requête,
- ledit message de requête comportant au moins un champ identifiant d'application, la carte à microcircuit analyse le contenu du champ identifiant d'application, l'identifiant d'application permettant de transmettre le message à la bonne application selon un premier mode d'association d'un identifiant à une application, ledit procédé étant **caractérisé en ce que :**

- ladite carte à microcircuit contient au moins deux **composants** mémoires **physiquement séparés** hermétiques l'une à l'autre,
- une application mandataire du premier ensemble d'applications, **hébergées sur le premier composant mémoire,** est associée à plusieurs identifiants d'applications d'un deuxième ensemble d'applications, **hébergées sur le premier composant mémoire,** comportant au moins une application,
- l'application mandataire valide selon des deuxièmes critères le contenu du message de requête,
- si les deuxièmes critères sont validés, l'application mandataire transmet le message de requête à l'application cible sensible du deuxième ensemble associée à l'identifiant d'application selon un deuxième mode d'association, ladite application mandataire permettant de communiquer entre les zones de mémoires hermétiques,
- l'application sensible ciblée traite le message de requête
- l'application sensible ciblée renvoie le résultat d'exécution de la requête à l'application mandataire,
- l'application mandataire génère la réponse correspondante au message de requête en y incorporant le résultat d'exécution de la requête reçue.

Dans une variante, le procédé selon l'invention est aussi **caractérisé en ce que** l'identifiant d'application utilisé pour le premier mode d'association est basé sur l'identifiant d'application AID de l'environnement Java.

Dans une variante, le procédé selon l'invention est aussi **caractérisé en ce que** le premier mode d'association utilise une table de résolution d'applications comportant au moins un couple [identifiant, application].

Dans une variante, le procédé selon l'invention est aussi **caractérisé en ce que** un identifiant non présent dans la table de résolution d'applications est associé à une application par défaut, l'application par défaut étant l'application mandataire.

Dans une variante, le procédé selon l'invention est aussi **caractérisé en ce que** l'identifiant d'application utilisé pour le deuxième mode d'association est basé sur l'identifiant d'application AID de l'environnement Java.

Dans une variante, le procédé selon l'invention est aussi **caractérisé en ce que** le deuxième mode d'association est identique au premier mais utilise une table de résolution différente.

Dans une variante, le procédé selon l'invention est aussi **caractérisé en ce que** l'hermétisme est obtenu par une étape de contrôle des instructions exécutées par chaque application.

Dans une variante, le procédé selon l'invention est aussi **caractérisé en ce que** chaque application du deuxième ensemble d'applications correspond à une zone mémoire hermétique pour les autres applications de l'ensemble.

Dans une variante, le procédé selon l'invention est aussi **caractérisé en ce que** les étapes d'hermétisme sont du type de celles mises en oeuvre pour la réalisation de "bac à sable" dans les environnements d'exécution d'application.

L'invention sera mieux comprise à la lecture de la description qui suit et à l'examen des figures qui l'accompagnent. Celles-ci sont présentées à titre indicatif et nullement limitatif de l'invention. Les figures montrent :
- Figure 1 : une illustration d'un dispositif mettant en oeuvre le procédé selon l'invention.
- Figure 2 : des étapes du procédé selon l'invention.

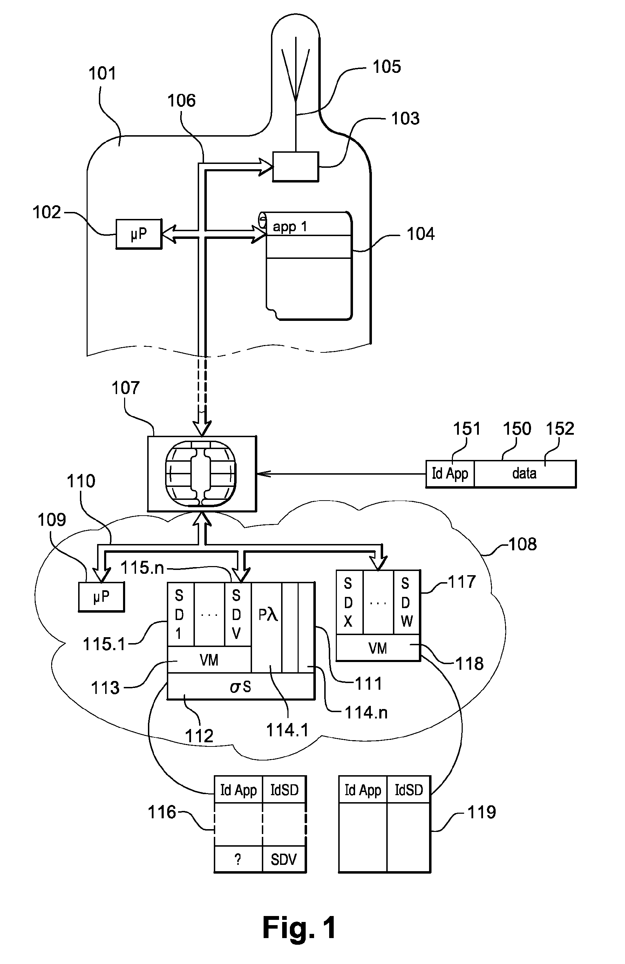

La figure 1 un montre un téléphone 101 portable comportant au moins tous les éléments d'un appareil standard du marché. Pour les besoins de la description on a choisi de décrire un téléphone 101 mobile mais dans la pratique le procédé selon l'invention s'applique à tout dispositif comportant un lecteur de cartes à microcircuit. De tels dispositifs sont aussi, par exemple, les assistants personnels (connus sous la dénomination de PDA), les ordinateurs personnels/portables/ultra-portables, etc, cette liste n'étant pas exhaustive.

Lorsque l'on prête une action à un dispositif, celle-ci est en fait réalisée par un microprocesseur de ce dispositif commandé par des codes instructions enregistrés dans une mémoire de programmes de ce dispositif. De la même manière lorsque l'on prête une action à un programme, ou à une zone mémoire comportant des codes instructions, cela signifie qu'un microprocesseur du dispositif comportant les codes instructions, ou la zone mémoire comportant des codes instructions, met en oeuvre ces codes instructions.

La figure 1 montre que le téléphone 101 comporte un microprocesseur 102, des circuits 103 interfaces avec au moins une antenne 105 et une mémoire 104 de programmes.

Les éléments 102 à 104 sont interconnectés via un bus 106.

Les circuits 103 permettent au téléphone 101 de recevoir et émettre des signaux selon une norme de téléphonie mobile qu'elle soit de deuxième génération, deuxième génération et demie, troisième génération ou d'une génération à venir. D'une manière générale les circuits 103 symbolisent l'aptitude du téléphone 101 à communiquer avec des dispositifs extérieurs selon une norme de communication ou de télécommunication. Les normes de télécommunication les plus fréquemment rencontrées sont :
- les normes Wi-Fi,
- la norme Bluetooth ®,
- les normes RFID.

Le téléphone 101 est donc ici vu, pour les besoins de la description, comme un appareil communicant.

La mémoire 104 comporte des codes instructions correspondant à au moins une application mise en oeuvre par le téléphone 101 suite à une sollicitation extérieure. Une telle sollicitation est, par exemple, parmi la liste formée d'au moins les éléments suivants :
- une action d'un utilisateur du téléphone 101 sur l'un des périphériques (non représentés) du téléphone 101, par exemple un clavier,
- la réception d'un message via les circuits 103.
- la réception d'un événement via les circuits 103, par exemple Reset, Boot, pression sur une touche spécifique, détection et/ou établissement d'un nouveau moyen de communication utilisable par ledit téléphone.

Une telle application a accès, de manière plus ou moins contrôlée, à tous les moyens de communication du téléphone 101.

La figure 1 montre aussi que le téléphone 101 comporte, connecté au bus 106, un lecteur 107 de cartes à microcircuit. Le lecteur 107 permet au téléphone 101 d'interagir avec une carte 108 à microcircuit.

La carte 108 à microcircuit met en oeuvre le procédé selon l'invention. La carte 108 comporte un microprocesseur connecté à un bus 110, ledit bus étant aussi connecté via une interface non représentée au lecteur 107.

La carte 108 comporte une première zone 111 mémoire de programme. La zone 111 est une représentation selon un modèle classique en couche d'une mémoire de programme. Pour accéder à une couche donnée, il faut traverser toutes les couches inférieures à la couche à laquelle on souhaite accéder.

La mémoire 111 comporte une couche 112 comportant des codes instructions correspondant au système d'exploitation (aussi connu sous le nom d'OS) de la carte 108. D'une manière simplifiée un système d'exploitation est un ensemble de programmes responsables de la liaison entre des ressources matérielles de la carte 108 et des applications de mise en oeuvre par la carte 108 et dont les codes instruction sont dans des couches supérieures.

Au dessus de la couche 112 la mémoire comporte des couches adjacentes comportant des codes instructions correspondant à des applications susceptibles d'être mises en oeuvre par la carte 108 suite à une sollicitation extérieure.

Dans notre exemple ces couches adjacentes sont :
- une couche 113 comportant des codes instructions correspondant à une machine virtuelle permettant de fournir un environnement d'exécution parfaitement contrôlé à des applications situées au-dessus de la couche 113. Au sein de cette même couche seraient par exemple hébergés les éléments ISD (Issuer Security Domain) au sens des normes/spécifications Global Platform (http://www.globalplatform.org/), ou d'autres éléments en charge du management (gestion) des applications, ce management pouvant être réalisé en boîte noire par rapport aux couches inférieures (communément appelées :
   Trusted Services Manager pour gestionnaire de services de confiance).
- des couches 114.1 à 114.n correspondant à des applications directement en contact avec le système d'exploitation de la carte 108.

La couche 113 comporte au-dessus d'elle, des sous-couches 115.1 à 115.n adjacentes correspondant à des applications devant satisfaire la couche 113 pour accéder au système d'exploitation de la carte 108.

Une architecture telle que celle des couches 113 et 115.1 à 115.n est, par exemple, purement logicielle mettant en oeuvre le concept de domaines de sécurité. Chacune des sous-couches 115.1 à 115.n est appelée un domaine de sécurité (aussi connu sous le nom de SD pour «Security Domain»). Un domaine de sécurité est défini au niveau du système d'exploitation du téléphone mobile, ou d'une surcouche, par exemple ici la couche 113 (intégrant une notion d'Issuer Security Domain (ISD) au sens de Global Platform), du système d'exploitation. Une telle surcouche est, par exemple, une machine virtuelle de type Java, un environnement sécurisé de type MULTOS, voire les systèmes multi-applicatifs pour cartes à puce Global Platform (www.globalplatform.org). On parle alors de machine 113 virtuelle pour désigner la couche 113.

Le domaine de sécurité comporte au moins une zone mémoire divisée en une zone de programmes et une zone de données. Les mécanismes du système d'exploitation ou de la surcouche, garantissent que les codes instructions de la zone de programmes d'un domaine de sécurité ne peuvent accéder qu'aux données de la zone de données dudit domaine de sécurité. Cet accès au domaine de sécurité est de plus protégé par un ensemble de clés. Il existe de cette manière plusieurs clés associées à un domaine de sécurité. Ainsi le domaine de la technique introduit la notion de jeu de clés ("keyset" : il s'agit de deux clés de chiffrement dans un schéma de chiffrement asymétrique) qui participe à la protection du domaine de sécurité, chacune de ces clés est dédiée à un rôle ou une fonction sécurité très précise, suivant les besoins de sécurisation du domaine de sécurité. La liste de clés ou de fonctions sécurité suivante n'est pas exhaustive, mais, pour la sécurisation d'un domaine plusieurs clés peuvent être mises en oeuvre au sein d'un même keyset suivant les besoins de sécurité propres au domaine considéré. Ainsi, il peut exister une clé pour instancier des services dans le domaine de sécurité (dans le cas de la mise en oeuvre non limitative de l'invention les domaines sont relatifs aux notions de SD et ISD de Global Platform), une clé pour activer ces services, une clé pour authentifier les accès à ces services, une clé pour chiffrer les communications avec ces services, une clé pour lire les données et paramètres associés à ces services une clé dédiée à chaque application instanciée au sein d'un domaine de sécurité SD pour lire, écrire ou modifier les données de cette application et une clé pour modifier les paramètres du domaine de sécurité, c'est-à-dire pour modifier le contenu de la zone de données dudit domaine. Seule la connaissance de la bonne clé, ou d'un moyen d'accès à la bonne clé permet alors d'entreprendre l'action souhaitée. Suivant les modes de gestion des clés mis en oeuvre il peut y avoir un «keyset» dédié pour une application, pour un domaine, pour un ensemble de cartes à microcircuit ou un «keyset» dédié pour le domaine identifié pour chacune des cartes à microcircuit de l'ensemble considéré.

Ces mécanismes permettent de garantir un bon cloisonnement des données entre les différents domaines de sécurité dans le cas où le système d'exploitation sous-jacent met en oeuvre le cloisonnement adéquat. Ce cloisonnement est obtenu par la mise en oeuvre d'un pare feu (aussi appelé Firewall) lors des tentatives de communications entre deux domaines de sécurité, ou la mise en oeuvre de bacs à sable, chaque bac à sable correspondant à un domaine de sécurité. Un bac à sable (connu comme un « sandbox » dans l'environnement Java) est un environnement d'exécution complet d'une application, ledit environnement étant hermétique vis-à-vis des autres bacs à sable existant dans la même mémoire.

Dans le cadre du monde de la carte à puce Java (JavaCard™) et de la plateforme «Global Platform» (http://www.globalplatform.org/), la notion de domaine de sécurité est ainsi proposée.

Dans une telle architecture les échanges de communications entre les domaines de sécurité, et donc les applications correspondantes, sont contrôlées par la machine virtuelle qui effectue du routage de message, quel message est destiné à quelle application, et qui effectue aussi dans l'application des stratégies de sécurité. En effet la machine virtuelle filtre les appels des applications des domaines de sécurité au système d'exploitation.

Dans l'invention, l'un des domaines de sécurité 115.* a un rôle particulier. On nomme ce domaine de sécurité SDV pour domaine de sécurité virtuel. Son rôle est de collecter tous les messages reçus par la couche 113 mais n'étant destiné à aucune des applications des domaines de sécurité contrôlées par la couche 113.

Ainsi la machine virtuelle correspondant à la couche 113 comporte une table 116 de routage de messages particuliers en ce sens qu'il existe une règle de routage par défaut envoyant tous les messages non attribués au domaine de sécurité nommé SDV pour traitement par ladite application mandataire hébergée au sein du SDV. Dans une variante de l'invention l'application mandataire en charge des traitements de contrôle et de routage est hébergée et instanciée au sein de l'ISD. Dans une variante de l'invention, la couche 113 assimile la notion de message non attribué au fait de la non connaissance par ladite couche 113 de l'AID (Application Identifier au sens de Java) présent au sein du message reçu. Une table de routage permet d'associer un identifiant d'application à un identifiant de domaine de sécurité. Un message 150 comporte au moins deux champs :
- un champ 151 comportant un identifiant d'une application (AID par exemple),
- un champ 152 comportant des données destinées à l'application identifiée par l'identifiant d'application. Ces données ont un format quelconque, propre à l'application à laquelle elles sont destinées. Un message tel le message 150 arrive à la machine 113 virtuelle après :
- avoir été produit par une application mise en oeuvre par le téléphone 101, par exemple une application dont les codes instructions sont enregistrés dans la mémoire 104 ;
- avoir été produit par une application d'un autre domaine de sécurité de la mémoire 111 ;
- avoir été reçu, via les circuits 103, par le téléphone 101.

La figure 1 montre aussi que la carte 108 comporte une deuxième zone 117 mémoire. La zone 117 est structurée selon l'architecture des domaines de sécurité, c'est-à-dire qu'elle comporte une couche 118 comportant des codes instructions correspondant à une machine 118 virtuelle. Au-dessus de la couche 118 se trouve des domaines de sécurité SDalpha à SDoméga. Le nombre de domaines de sécurité au-dessus de la couche 118 n'a pas vocation à évoluer au cours de la vie de la carte 108 pour limiter les impacts sécurité induits par une augmentation ou une gestion des domaines de sécurité au-dessus de la couche 118, mais ce point n'est pas limitatif de l'invention, les travaux en cours de spécifications au sein du consortium Global Platform devraient permettre à partir de la version GP2.3 de générer dynamiquement et de façon sécurisée des domaines de sécurité (SD). Le fait de figer ce nombre garantit une stabilité d'environnement propre à l'obtention d'une certification selon les Critères Communs autorisant la mise en oeuvre des applications les plus exigeantes. C'est dans l'un des domaines de sécurité de la zone 118 que l'on pourra installer une application d'une banque particulière. Plusieurs applications de plusieurs banques peuvent alors être installées dans cette architecture, chaque application étant installée dans son domaine de sécurité.

Dans une variante non limitative de l'invention, de façon à simplifier les mises en oeuvre des extraditions et des instanciations d'applications Java au sens de Global Platform, un composant de type ISD est positionné dans le composant 117, son comportement étant identique à celui défini au niveau de Global Platform avec la restriction que son environnement externe se limite à une communication avec l'application mandataire hébergée dans le SDV, on peut alors dire que l'ISD du composant 112 est relié à son dual dans le composant 117.

Dans une autre variante de l'invention, le composant 117 est configuré en usine et aucune autre application ne peut y être téléchargée/instanciée.

Dans une variante de l'invention, la mémoire du composant 117 comporte une zone ROM dans laquelle sont inscrites les informations non altérables du type les domaines de sécurité, et les applications sensibles stockées au sein de ceux-ci, les données manipulées par les domaines de sécurité, les applications quant à elles étant stockées dans les zones mémoires de types EEPROM, flash ou RAM.

Dans la pratique il existe plusieurs façons d'assurer un cloisonnement hermétique de la zone mémoire 117. On en cite au moins deux :
- la zone mémoire 117 est un domaine de sécurité situé au-dessus de la machine 113 virtuelle ;
- la zone mémoire 117 est un composant physique propre, c'est-à-dire que la carte 108 comporte au moins 2 composants, un sur lequel sont implantés les microprocesseurs 109 et mémoire 111, un autre sur lequel est implantée la mémoire 117.

Dans les deux cas l'accès à la mémoire 117 est conditionné par une validation de la communication par le domaine de sécurité SDV et l'application mandataire hébergée. En effet les applications installées dans les domaines de sécurité de la zone mémoire 117 sont inconnues de la machine 113 virtuelle. Tous les messages qui leur sont destinés sont donc dirigés vers le domaine de sécurité SDV de la zone 111 mémoire.

Dans une variante de l'invention, le microprocesseur de la carte à puce est en charge de la recopie / du transfert des messages autorisés d'une zone hermétique à une autre, cette recopie ou ce transfert pouvant être réalisé, liste non exhaustive, via une gestion de buffer et d'événements associés, au travers d'une liaison I/O (Input/Output pour entrée/sortie) série, via un bus parallèle, au travers de au moins deux piles de protocoles (une de chaque coté de la liaison utilisée pour la recopie/transfert) mettant ou non en oeuvre un chiffrement.

Dans une variante de l'invention, le microprocesseur contient ou gère des zones de données hermétiques à son unique usage, zones mémoires étant physiquement et logiquement non accessibles/visibles entre elles.

Dans une variante de l'invention, la carte à puce contient plus de deux zones hermétiques, l'accès à ces zones ne pouvant être réalisé que par l'application mandataire du SDV de la première zone. Dans une sous-variante de l'invention l'accès à ces zones hermétiques est réalisée séquentiellement, c'est-à-dire que chaque zone hermétique contient son propre SDV et son application mandataire et réplique à son niveau les traitements sur les messages reçus des étapes 202 à 207. Dans une autre sous-variante, les accès aux zones hermétiques sont réalisés en combinant les principes des deux variantes précédentes, à savoir une possibilité d'organisation séquentielle et/ou parallèle des accès avec une réplication à chacun des niveaux des zones hermétiques des traitements 202 à 207.

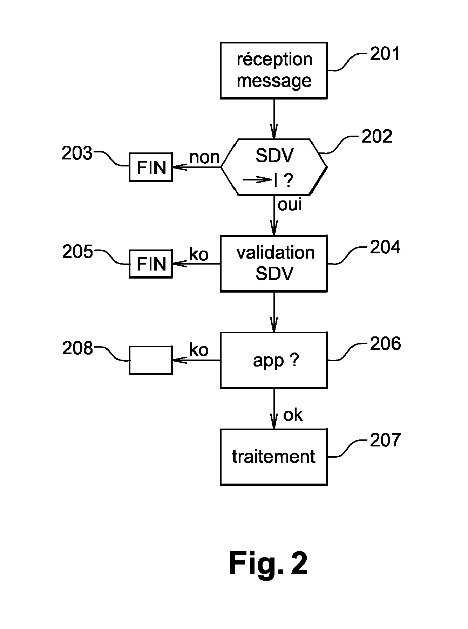

La figure 2 montre une étape 201 de réception du message 150 par la carte 108. Dans l'étape 201 la carte 108 reçoit le message 150 qui a été décrit de manière simplifiée, c'est-à-dire avec uniquement les champs impliqués directement dans l'invention. Dans la pratique un tel message comporte aussi un en-tête spécifiant tout où partie des informations suivantes :
- identifiant émetteur,
- identifiant destinataire,
- protocole ou service utilisé,
- type de données

Cette liste n'est bien entendu pas exhaustive. Dans l'étape 201 la carte 108 utilise tout ou partie de ces informations pour effectuer des tests de validité du message selon des règles de filtrages prédéfinies. Si le message passe cette première batterie de tests alors le message est envoyé vers son application destinataire, ici la machine 113 virtuelle.

Dans une étape 202 suivant l'étape 201, la machine 113 virtuelle analyse le message 150 pour en extraire l'identifiant 151 d'application. Une fois cet identifiant extrait, la machine 113 virtuelle le recherche dans la table 116 pour lui associer un identifiant de domaine de sécurité. Si l'identifiant 151 est présent dans la table 116 alors la machine 113 transmet le message 150 à l'application correspondant au domaine de sécurité dont l'identifiant a été trouvé dans la table 116. Ce message est alors traité par ladite application dans une étape 203. C'est le fonctionnement standard des domaines de sécurité.

Si l'identifiant 151 n'est pas trouvé dans la table 116 alors la configuration par défaut est appliquée, c'est-à-dire que le message 150 est transmis au domaine de sécurité SDV et à une application mandataire qui s'y trouve. On parle d'une application mandataire par référence aux serveurs mandataires (proxy) qui servent d'intermédiaires dans les communications réseau.

Dans une étape 204 suivant l'étape 202, l'application mandataire valide le message 150. Dans la mesure où l'application mandataire sait que le message est destiné à une application sensible car située dans la zone 117, elle applique des deuxièmes critères de validations plus stricts que les premiers appliqués par la carte 108, ces critères pouvant être de façon non limitative de l'invention un contrôle de la syntaxe et de la sémantique des messages reçus par rapport aux différents environnements potentiellement pris en compte par l'application mandataire et en particulier par rapport à sa connaissance implicite ou explicite des différents états des éléments de la carte 108 (initialisation, configuration, téléchargement, instanciation, extradition, duplication, destruction, liste non limitative). En particulier elle interdit tout message dont la finalité serait une modification non autorisée de l'intégrité, de l'état, de la zone de données, des applications et objets partagés de l'application à laquelle le message est destiné ( au travers de téléchargements de code, de données ou morceau de code, ou toutes autres requêtes relatives au management : création, modification, destruction, lecture, copie) des données, applications, librairies, des domaines de sécurité, des «keysets» associés, liste non limitative de l'invention). Dans l'invention l'application mandataire l'est dans les deux sens, c'est-à-dire qu'elle filtre également les messages émis par les applications se trouvant dans les domaines de sécurité de la zone 117. Ainsi une application une fois certifiée et installée dans un domaine de sécurité de la zone 117 ne peut pas être modifiée en dehors de tout contrôle. Cela assure la stabilité de l'environnement.

Si le message n'est pas jugé valide, alors on passe à une étape 205 de fin dans laquelle le message est simplement ignoré et effacé, sinon le message 150 est envoyé à la machine 118 virtuelle de la zone 117 et on passe à une étape 206.

Dans l'étape 206 la machine 118 virtuelle reçoit le message 150. La machine 118 a accès à une table 119 de routage équivalente à la table 116 pour permettre de faire correctement traiter les messages reçus. Dans l'étape 206, la machine 118 lit l'identifiant 151 et le recherche dans la table 119. Si l'identifiant 151 est trouvé dans la table 119 alors la machine 118 virtuelle passe le message 150 à l'application contenue dans le domaine de sécurité trouvé dans la table 119 en même temps que l'identifiant 151.

Dans ce cas, dans une étape 207 le message 150 est traité par l'application à laquelle il était destiné dès l'origine. Dans le cas contraire, c'est-à-dire si l'identifiant 151 n'est pas trouvé dans la table 119, alors le message 150 est ignoré et/ou effacé dans une étape 208.

Dans l'invention chaque application de la zone 117 correspond à un domaine de sécurité, c'est-à-dire qu'elle est exécutée via une machine virtuelle. Cela signifie que chaque instruction de l'application est validée par la machine virtuelle avant d'être exécutée. Cette validation porte sur l'instruction elle-même, mais aussi sur les paramètres de l'instruction. En particulier, dans l'invention, la machine 118 virtuelle interdit tout paramètre qui permettrait à une instruction de lire/écrire/effacer des données qui ne se trouvent pas dans son domaine de sécurité. On a ainsi un cloisonnement inviolable, car garanti au niveau même de l'instruction et du processeur virtuel, entre les différents domaines de sécurité de la zone 117. Dans une variante de l'invention, la zone 117 permet d'héberger des librairies de fonctions sensibles, évaluées au niveau EAL4+ et n'étant accessibles qu'aux applications de la zone 117, cette variante permet de garantir le niveau de sécurité des applications résidentes dans leurs usages de fonctions cryptographiques et/ou manipulation de secrets.

Le procédé selon l'invention permet donc la mise en oeuvre d'une application dans un environnement parfaitement sécurisé grâce à la mise en oeuvre de domaines de sécurité et ce sur plusieurs niveaux. Ce procédé autorise en outre avantageusement un environnement évolutif sans préjudice pour la sécurité. En effet la zone 117 mémoire a une structure prédéfinie qui ne doit pas évoluer au cours de la vie de la carte. Elle est donc prévue dès le départ pour accueillir N applications dans N domaines de sécurité gérées par une application mandataire et situées dans une zone mémoire à laquelle il est impossible d'accéder sans passer par l'application mandataire elle-même installée dans un domaine de sécurité dont seul le fournisseur de la carte 108 a la maitrise complète. Aucune modification apportée à la zone 111 ne saurait donc compromettre la sécurité de la zone 117.

## Revendications

1. - Procédé d'ouverture sécurisée à des tiers d'une carte à microcircuit distribuée par un fournisseur de services, ladite carte à microcircuit comporte un premier ensemble d'applications comportant au moins une application, ledit procédé comportant au moins les étapes suivantes:
- à la réception d'un message de requête la carte à microcircuit valide selon des premiers critères le contenu du message de requête,
- ledit message de requête comportant au moins un champ identifiant d'application, la carte à microcircuit analyse le contenu du champ identifiant d'application, l'identifiant d'application permettant de transmettre le message à la bonne application selon un premier mode d'association d'un identifiant à une application, ledit procédé étant **caractérisé en ce que :**
- ladite carte à microcircuit contient au moins deux **composants** mémoires **physiquement séparés** hermétiques l'une à l'autre,
- une application mandataire du premier ensemble d'applications, **hébergées sur le premier composant mémoire,** est associée à plusieurs identifiants d'applications d'un deuxième ensemble d'applications, **hébergées sur le premier composant mémoire**, comportant au moins une application,
- l'application mandataire valide selon des deuxièmes critères le contenu du message de requête,
- si les deuxièmes critères sont validés, l'application mandataire transmet le message de requête à l'application cible sensible du deuxième ensemble associée à l'identifiant d'application selon un deuxième mode d'association, ladite application mandataire permettant de communiquer entre les zones de mémoires hermétiques,
- l'application sensible ciblée traite le message de requête
- l'application sensible ciblée renvoie le résultat d'exécution de la requête à l'application mandataire,
- l'application mandataire génère la réponse correspondante au message de requête en y incorporant le résultat d'exécution de la requête reçue.

2. - Procédé selon la revendication 1, **caractérisé en ce que** l'identifiant d'application utilisé pour premier mode d'association est basé sur l'identifiant d'application AID de l'environnement Java.

3. - Procédé selon les revendications 1 ou 2, **caractérisé en ce que** le premier mode d'association utilise une table de résolution d'applications comportant au moins un couple [identifiant, application].

4. - Procédé selon la revendication 3, **caractérisé en ce que** un identifiant non présent dans la table de résolution d'applications est associé à une application par défaut, l'application par défaut étant l'application mandataire.

5. - Procédé selon l'une des revendications 1 à 4, **caractérisé en ce que** l'identifiant d'application utilisé pour le deuxième mode d'association est basé sur l'identifiant d'application AID de l'environnement Java.

6. - Procédé selon l'une des revendications 1 à 5, **caractérisé en ce que** le deuxième mode d'association est identique au premier mais utilise une table de résolution différente.

7. - Procédé selon la revendication 6, **caractérisé en ce que** l'hermétisme est obtenu par une étape de contrôle des instructions exécutées par chaque application.

8. - Procédé selon l'une des revendications 1 à 7, **caractérisé en ce que** chaque application du deuxième ensemble d'applications correspond à une zone mémoire hermétique pour les autres applications de l'ensemble.

9. - Procédé selon la revendication 7 ou 8, **caractérisé en ce que** les étapes d'hermétisme sont du type de celles mises en oeuvre pour la réalisation de "bac à sable" dans les environnements d'exécution d'application.
